# EUROPÄISCHE PATENTSCHRIFT

(11) **EP 0 561 024 B1**
(45) Veröffentlichungstag und Bekanntmachung des Hinweises auf die Patenterteilung: **31.05.1995**
(21) Anmeldenummer: 92104720.5
(22) Anmeldetag: 18.03.1992
(51) Int. Cl.: H01H 71/10, H01H 71/02

(54) **Koppelbares Installationsgerät**
Installation apparatus with coupling means
Appareil d'installation accouplable

(43) Veröffentlichungstag der Anmeldung: 22.09.1993
(73) Patentinhaber: SIEMENS AKTIENGESELLSCHAFT, 80333 München (DE)
(72) Erfinder: Fischer, Elmar, Dipl.-Ing. (FH), W-8400 Regensburg (DE); Weber, Christoph, Dipl.-Ing. (FH), W-8300 Landshut (DE)

(56) Entgegenhaltungen:
- EP-B- 0 208 613
- DE-B- 2 349 600
- US-A- 3 842 376

## Beschreibung

Die Erfindung bezieht sich auf ein koppelbares Installationsgerät, nach Art eines Schutzschaltgeräts, nachstehend Gerät genannt, das für den Zusammenbau in Anreihung mit weiteren Geräten des bezüglich der Kopplung selben Typs vorgesehen ist, im einzelnen nach Gattungsbegriff von Patentanspruch 1. Hierbei wirken Drehelemente mechanischer Glieder anzubauender Geräte mittels Gehäuseausnehmungen in ansonsten geschlossenen Gehäusen zusammen. Die Drehelemente können komplementär und eine Drehbewegung übertragend ineinandergreifen, wozu sogenannte männliche und weibliche Koppelelemente dienen; siehe DE-B 23 49 600.

Bei einem bekannten koppelbaren Installationsgerät ist in einer ortsfest gelagerten Hohlachse jeweils beweglich eine Welle gelagert, welche die Hohlachse in einer Ausnehmung mit Drehspiel durchgreift. Die Welle ist endständig jeweils als Kupplung ausgebildet. Zu einem anzubauenden Gerät stellt jeweils ein einsetzbares Kupplungselement die Verbindung zum Kupplungsteil des benachbarten Geräts her.

Der Erfindung liegt die Aufgabe zugrunde, ein koppelbares Installationsgerät zu entwickeln, das im wesentlichen mit geschlossenem Gehäuse ausgeführt ist und zur Kopplung mit weiteren Geräten keine zusätzlichen losen Kupplungsteile erfordert.

Die Lösung der geschilderten Aufgabe erfolgt durch ein koppelbares Installationsgerät nach Patentanspruch 1. Danach bilden die Gehäuseausnehmungen für die Koppelelemente ineinandergreifbare Zentriermittel. Beim bekannten Gerät können die beim Zusammenbau mehrerer Geräte einzusetzenden Koppelglieder toleranzausgleichend ausgeführt werden. Wenn die Drehelemente nach der Erfindung endständig selbst die Koppelelemente zum anzubauenden benachbarten Gerät bilden, erzwingen die Zentriermittel das funktionsgerechte Ineinandergreifen der Koppelelemente. Dadurch benötigt man beim Zusammenbau mehrerer Geräte keine Zusatzteile.

Es ist ein Vielpolschutzschalter bekannt, der durch Zusammenfügen von mindestens zwei isolierenden schalenförmigen Gehäusen und einem Deckel gebildet wird und der identische Koppelglieder aufweist, die jeweils im Gehäuseboden gelagert sind (EP-B1-0 208 613). Die einzelnen Teilgeräte können jedoch nicht ohne weiteres als selbständige Geräte verwendet werden.

Erfindungsgemäß wird vorgeschlagen, die Zentriermittel 5 gegen die Koppelelemente, die von den Drehelementen 3 gebildet werden, bewußt toleranzausgleichend zu entkoppeln. Dadurch kann man auch unterschiedlich Nachschwindverhalten von Kunststoff- bzw. Formstoffteilen ausgleichen. Ausnehmungen 7 für die Aufnahme von Verbindungsmitteln 6 von in Anreihung zusammenbaubaren Geräte können vorteilhafterweise toleranzausgleichende Ausweitungen bilden.

Die Erfindung soll nun anhand eines in der Zeichnung grob schematisch wiedergegebenen Ausführungsbeispiels näher erläutert werden:
- In FIG 1: ist ein koppelbares Installationsgerät zusammen mit einem weiteren anbaubaren Installationsgerät und angedeuteten weiteren Geräten nach Art einer Explosionsdarstellung veranschaulicht.
- In FIG 2: ist eine Schnittansicht durch das Zentriermittel für anzubauende Installationsgeräte in vergrößertem Maßstab wiedergegeben.

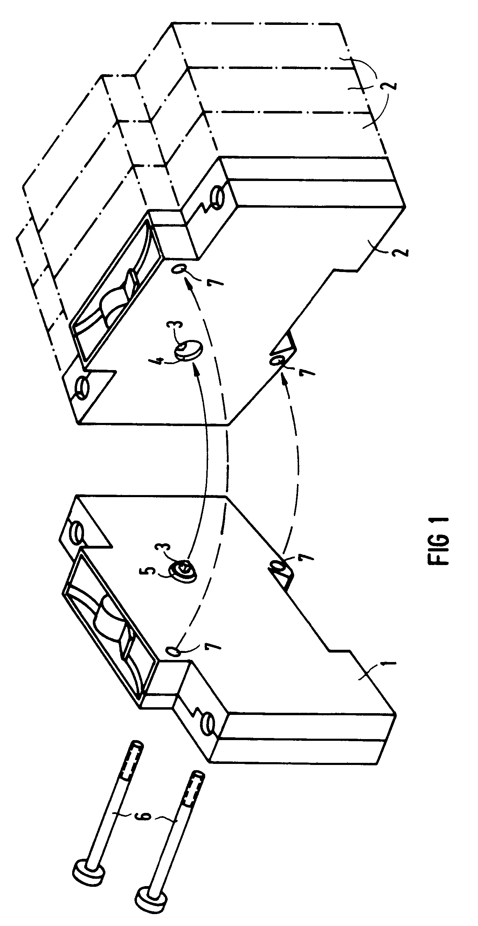

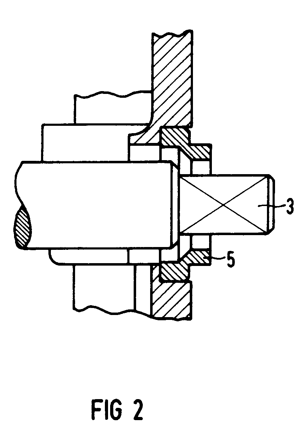

Das koppelbare Installationsgerät 1 nach FIG 1, nach Art eines Schutzschaltgeräts, beispielsweise eines Leitungsschutzschalters, im weiteren Gerät genannt, ist für den Zusammenbau in Anreihung mit weiteren Geräten 2 vorgesehen. Das weitere Gerät 2 ist bezüglich der Kopplung vom selben Typ wie das Gerät 1. Drehelemente 3 mechanischer Glieder anzubauender Geräte können durch Gehäuseausnehmungen 4 in ansonsten geschlossenen Gehäusen komplementär und eine Drehbewegung übertragend ineinandergreifen. Hierzu können sogenannte männliche und weibliche Koppelelemente dienen. Also beispielsweise ein schraubendreherartiger Zapfen und eine entsprechende nutförmige Ausnehmung im anzubauenden Gerät. Die Gehäuseausnehmungen 4 bilden ineinandergreifbare Zentriermittel 5, beispielsweise einen wulstartigen Vorsprung und eine entsprechende Aufnahme im anzubauenden Gerät. In FIG 2 ist eine Ausführungsform für ein Zentriermittel 5, das wulstartig ist, veranschaulicht. Ein derartiges koppelbares Installationsgerät kann bei Schmalbauweise auf seiner einen Seite einen Wulst und auf seiner gegenüberliegenden Seite eine entsprechende Ausnehmung aufweisen. Verständlicherweise kann auch ein koppelbares Installationsgerät lediglich auf einer Seite ein Zentriermittel und ein Koppelelement aufweisen. Als Koppelelemente dienen jeweils die Stirnseiten der Drehelemente 3 selbst.

Wenn je Gerät auf gegenüberliegenden Gehäuseseiten je ein Koppelelement und ein Zentriermittel ausgeführt ist, kann ein derartiges Gerät auf beiden Seiten mit weiteren Geräten zusammengebaut werden.

## Patentansprüche

1. Koppelbares Installationsgerät (1) nach Art eines Schutzschaltgeräts, nachstehend Gerät genannt, das für den Zusammenbau in Anreihung mit weiteren Geräten des bezüglich der Kopplung selben Typs vorgesehen ist, wobei Drehelemente (3) mechanischer Glieder zusammenzubauender Geräte durch Gehäuseausnehmungen (4) in ansonsten geschlossenen Gehäusen komplementär und eine Drehbewegung übertragend ineinandergreifen können, wozu sogenannte männliche und weibliche Koppelelemente dienen, wobei die Koppelelemente durch die Drehelemente (3) der Geräte selbst gebildet werden, **dadurch gekennzeichnet**, daß die Gehäuseausnehmungen (4) ineinandergreifbare Zentriermittel (5) enthalten, wobei die Zentriermittel (5) gegen die Koppelelemente toleranzausgleichend entkoppelt sind.

2. Koppelbares Gerät nach Anspruch 1,
**dadurch gekennzeichnet**, daß Ausnehmungen (7) für die Aufnahme von Verbindungsmitteln (6) für in Anreihung zusammenbaubare Geräte toleranzausgleichende Ausweitungen bilden.

3. Koppelbares Gerät nach Anspruch 1 oder 2,
**dadurch gekennzeichnet**, daß als Zentriermittel (5) ein vorstehender Wulst einerseits und eine Aufnahme für den Wulst anderseits vorgesehen sind.

4. Koppelbares Gerät nach Anspruch 1,
**dadurch gekennzeichnet**, daß ein Gerät auf gegenüberliegenden Gehäuseseiten je ein Koppelelement und ein Zentriermittel (5) aufweist.

## Claims

1. Installation device (1) capable of being coupled, like a protective switching device, called device in the following, which is provided for assembly in series with further devices of the same type with respect to the coupling, whereby rotary elements (3) of mechanical members of devices to be assembled can engage into one another through housing recesses (4) in otherwise closed housings in a complementary manner and in such a way as to transmit a rotary movement, this purpose being served by so-called male and female coupling elements, whereby the coupling elements are formed by the rotary elements (3) of the devices themselves, characterized in that the housing recesses (4) contain centring means (5) which can engage into one another, whereby the centring means (5) are decoupled in a tolerance-compensating manner against the coupling elements.

2. Device capable of being coupled according to claim 1, characterized in that recesses (7) for the mounting of connection means (6) for devices capable of being assembled in series form tolerance-compensating enlargements.

3. Device capable of being coupled according to claim 1 or 2, characterized in that a projecting bead on one side and a mounting for the bead on the other side are provided as centring means (5).

4. Device capable of being coupled according to claim 1, characterized in that a device has on opposite housing sides in each case a coupling element and centring means (5).

## Revendications

1. Appareil d'installation électrique (1) pouvant être couplé, réalisé à la manière d'un disjoncteur de protection et qu'on appellera ci-après "appareil", prévu pour être assemblé en séquence avec d'autres appareils ayant un accouplement du même type, des éléments tournants (3) d'organes mécaniques d'appareils à assembler pouvant s'emboîter les uns dans les autres, de façon complémentaire et de manière à transmettre un mouvement de rotation, dans des creux (4) de boîtier ménagés dans des boîtiers qui, sinon, sont fermés, des éléments de couplage dits mâles et femelles étant utilisés à cet effet, les éléments de couplage étant formés par les éléments tournants (3) des appareils eux-mêmes, caractérisé en ce que les creux (4) de boîtier comportent des moyens de centrage (5) qui peuvent s'emboîter les uns dans les autres, les moyens de centrage (5) étant découplés des éléments de couplage d'une manière qui permet de compenser les tolérances.

2. Appareil pouvant être couplé selon la revendication 1,
caractérisé en ce que des creux (7) de réception de moyens de liaison (6) d'appareils pouvant être assemblés en séquence forment des parties élargies qui permettent de compenser les tolérances.

3. Appareil pouvant être couplé selon la revendication 1 ou 2,
caractérisé en ce qu'un bourrelet saillant, d'une part, et un logement destiné au bourrelet, d'autre part, sont prévus comme moyens de centrage (5).

4. Appareil pouvant être couplé selon la revendication 1,
caractérisé en ce que l'appareil comprend sur des côtés oppsés du boîtier respectivement un élément de couplage et un moyen de centrage (5).
